# EUROPÄISCHE PATENTANMELDUNG

(11) **EP 1 001 199 A2**
(43) Veröffentlichungstag der Anmeldung: **17.05.2000**
(21) Anmeldenummer: 99118516.6
(22) Anmeldetag: 18.09.1999
(51) Int. Cl.: F16K 31/06, F16K 1/44

(54) **Doppelventileinrichtung**

(30) Priorität: 13.11.1998 DE 19852349
(71) Anmelder: WABCO GmbH, 30453 Hannover (DE)
(72) Erfinder: Lichtenberg, Wolfgang, 30457 Hannover (DE)
(74) Vertreter: Schrödter, Manfred

(57) **Zusammenfassung**

Es ist eine Ventileinrichtung vorgesehen, die einen mit einem ersten Verbraucher verbundenen ersten Druckmittelanschluß (2), einen mit einem zweiten Verbraucher verbundenen zweiten Druckmittelanschluß (4) und einen mit einer Druckmittelquelle verbundenen oder verbindbaren dritten Druckmittelanschluß (3) aufweist. Die Ventileinrichtung besitzt ein erstes Ventil (20, 17) mit einem ersten Ventilsitz (20) und einem ersten bewegbaren Ventilglied (17) sowie ein zweites Ventil (5, 7) mit einem zweiten Ventilsitz (5) und einem zweiten bewegbaren Ventilglied (7). Mittels einer als Betätigungsmittel dienenden Elektromagneteinrichtung (11, 12) sind die beiden Ventile (20, 17 und 5, 7) gleichzeitig betätigbar.

Die beiden Ventile (20, 17 und 5, 7) sind so ausgebildet und so zueinander angeordnet, daß der erste Druckmittelanschluß (2) und der zweite Druckmittelanschluß (4) wahlweise gleichzeitig miteinander und mit dem dritten Druckmittelanschluß (3) verbindbar oder gegeneinander und gegen den dritten Druckmittelanschluß (3) absperrbar sind.

Die beiden Ventilglieder (17 und 7) sind an einem gemeinsamen Träger (8, 9) angeordnet, der mit einem Anker (12) der Elektromagneteinrichtung (11, 12) verbunden ist.

## Beschreibung

Die Erfindung betrifft eine Ventileinrichtung gemäß dem Oberbegriff des Patentanspruchs 1.

Eine derartige Ventileinrichtung ist aus der DE 40 33 946 A1 bekannt.

Die bekannte Ventileinrichtung besteht im wesentlichen aus zwei Ventilen und einem einzigen aus einer Elektromagneteinrichtung bestehenden Betätigungsmittel zum gleichzeitigen Betätigen der beiden Ventile. Die beiden Ventile sind als Rückschlagventile ausgebildet, die von einem Druckmittel in ihrer Schließstellung gehalten werden. Mittels zweier am Anker der Elektromagneteinrichtung angeordneter Stößel sind die beiden Ventile, bei Anlegen einer Spannung an die Elektromagneteinrichtung, gleichzeitig in ihre Offenstellung bringbar.

Es ist mit dieser Ventileinrichtung möglich, einen Verbraucher mit einer Druckmittelquelle zu verbinden oder gegen die Druckmittelquelle abzusperren.

Der Erfindung liegt die Aufgabe zugrunde, eine Ventileinrichtung der eingangs erwähnten Art, welche nur ein Betätigungsmittel aufweist, so auszubilden, daß es möglich ist, wenigstens zwei Verbraucher gleichzeitig wahlweise miteinander und mit einer Druckmittelquelle zu verbinden oder gegeneinander und gegen die Druckmittelquelle abzusperren.

Diese Aufgabe wird mit den in den Patentansprüchen 1 und 2 angegebenen Ausführungen der Erfindung gelöst. Weiterbildungen und vorteilhafte Ausgestaltungen der Erfindung sind in den Unteransprüchen angegeben.

Die Erfindung bietet insbesondere den Vorteil, daß eine Verringerung des Bauteileaufwandes erreicht wird.

Gemäß von in den Unteransprüchen angegebenen weiteren vorteilhaften Weiterbildungen des Erfindungsgegenstandes wird das Betätigungsmittel für die beiden Ventile von einem Elektromagneten oder von einem mit einem Druckmittel beaufschlagbaren Kolben gebildet, wobei der Anker des Elektromagneten oder der Kolben als Träger für die bewegbaren Ventilglieder oder als ein für beide Ventile gemeinsames bewegbares Ventilglied ausgebildet sein kann.

Durch diese Maßnahmen wird eine weitere Verringerung des Bauteileaufwandes erreicht.

In vorteilhafter Weise sind am Träger für die bewegbaren Ventilglieder oder an dem für beide Ventile gemeinsamen Ventilglied mit einem Druckmittel beaufschlagbare Flächen einander entgegengerichtet angeordnet, so daß bei geöffneten Ventilen der Träger mit den Ventilgliedern oder das für beide Ventile gemeinsame Ventilglied im wesentlichen kraftentlastet ist. Um eine Endlage der Ventilglieder bzw. des gemeinsamen Ventilgliedes zu definieren ist eine Feder vorgesehen, welche den Träger oder das Ventilglied in Öffnungsrichtung oder in Schließrichtung der Ventile beaufschlagt. Diese Maßnahmen bewirken, daß vom Betätigungsmittel zum Betätigen der Ventile nur eine relativ geringe Betätigungskraft aufgebracht werden muß.

Zum Ausgleichen von Toleranzen zwischen den Ventilsitzen und/oder zwischen wenigstens dem einen Ventilsitz und einem Ventilglied ist vorteilhafterweise ein elastisch verformbarer Bereich am Träger oder an dem für beide Ventilsitze gemeinsamen Ventilglied vorgesehen.

In vorteilhafter Weise kann auch am Ventilglied bzw. an den Ventilgliedern ein elastisch verformbarer Körper, z.B. ein Dichtkörper, angeordnet werden, der dann sowohl die Dichtfunktion erfüllt als auch Toleranzen ausgleicht.

Gemäß einer vorteilhaften Ausgestaltung des Erfindungsgegenstandes können zum Ausgleichen von Toleranzen die Ventilglieder auch relativ zum Träger bewegbar am Träger angeordnet werden. Zwischen dem Träger und den Ventilgliedern sind dann Federn angeordnet, die sich mit ihrem einen Ende am Träger abstützen und mit ihrem anderen Ende die Ventilglieder in Richtung vom Träger weg beaufschlagen.

Anhand der Zeichnung werden nachfolgend vier Ausführungsbeispiele der Erfindung näher erläutert.

Es zeigen:
- Fig. 1: eine elektromagnetisch betätigbare Ventileinrichtung mit zwei Ventilen, die je einen Ventilsitz und je ein einem Ventilsitz zugeordnetes bewegbares Ventilglied aufweisen, wobei die beiden Ventilglieder an einem für beide Ventile gemeinsamen Träger angeordnet sind;
- Fig. 2: einen Träger mit zwei Ventilgliedern, wobei jedoch die Ventilglieder relativ zum Träger bewegbar am Träger angeordnet sind;
- Fig. 3: eine elektromagnetisch betätigbare Ventileinrichtung mit zwei Ventilsitzen und einem für beide Ventile gemeinsamen bewegbaren Ventilglied und
- Fig. 4: eine Ventileinrichtung mit zwei Ventilsitzen und einem für beide Ventile gemeinsamen bewegbaren Ventilglied, wobei das bewegbare Ventilglied von einem Kolben gebildet wird, der zusätzlich die Funktion eines Betätigungsmittels für die beiden Ventile hat.

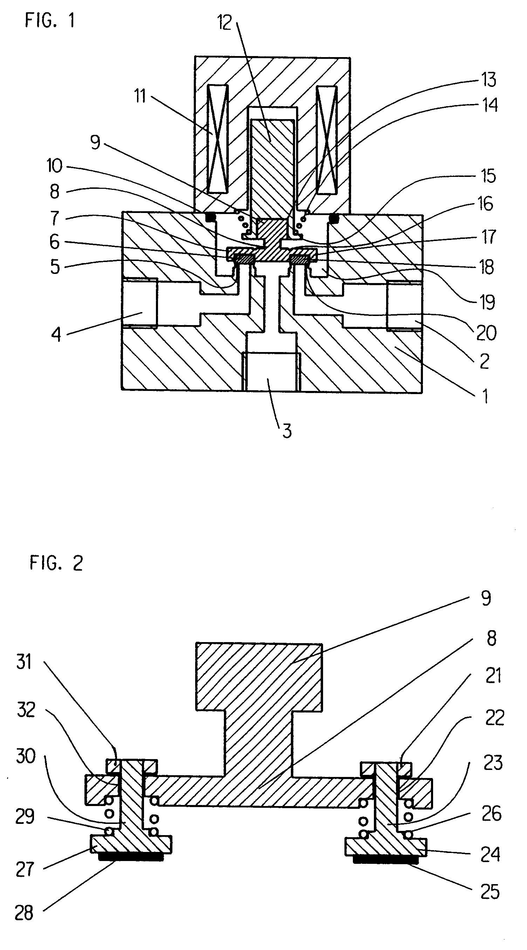

Die in Fig. 1 dargestellte Ventileinrichtung weist ein Gehäuse (1) mit einem ersten Druckmittelanschluß (2), einem zweiten Druckmittelanschluß (4) und einem dritten Druckmittelanschluß (3) auf. Im Gehäuse (1) sind ein erstes Ventil (20, 18, 17) und ein zweites Ventil (5, 6, 7) angeordnet. Der dritte Druckmittelanschluß (3) ist mit einer im Gehäuse angeordneten Druckmittelkammer (19) verbunden. Über das erste Ventil (20, 18, 17) und die Druckmittelkammer (19) ist der erste Druckmittelanschluß (2) mit dem dritten Druckmittelanschluß (3) verbindbar. Über das zweite Ventil (5, 6, 7) und die Druckmittelkammer (19) ist der zweite Druckmittelanschluß (4) mit dem dritten Druckmittelanschluß (3) verbindbar.

Das erste Ventil (20, 18, 17) besteht aus einem in der Druckmittelkammer (19) gelegenen gehäusefesten ersten Ventilsitz (20) und einem relativ zu diesem bewegbar angeordneten ersten Ventilglied (18, 17). Das zweite Ventil (5, 6, 7) besteht aus einem in der Druckmittelkammer (19) gelegenen gehäusefesten zweiten Ventilsitz (5) und einem relativ zu diesem bewegbar angeordneten zweiten Ventilglied (6, 7). Die beiden Ventilsitze (20 und 5) sind in einer Ebene nebeneinander angeordnet. Das erste Ventilglied (18, 17) wird von einem äußeren Abschnitt (17) eines für die bewegbaren Ventilglieder (18, 17 und 6, 7) beider Ventile (20, 18, 17 und 5, 6, 7) gemeinsamen plattenartig ausgebildeten Trägers (8, 9) und einem ventilsitzseitig an diesem Abschnitt (17) angeordneten Dichtelement (18) gebildet. Das zweite Ventilglied (6, 7) wird von einem äußeren Abschnitt (7) desselben Trägers (8, 9) und einem ventilsitzseitig an diesem Abschnitt (7) angeordneten Dichtelement (6) gebildet. Der Träger (8, 9) weist einen elastisch verformbaren Bereich (16) auf, der die Funktion einer Biegezone hat, die zum Ausgleichen von Toleranzen zwischen den Ventilsitzen (20 und 5) und/oder zwischen wenigstens dem einen Ventilsitz (20 bzw. 5) und den Ventilgliedern (18, 17 und 7, 6) dient. Die von den beiden Abschnitten (17 und 7) des Trägers (8, 9) gebildeten Ventilglieder (17, 18 und 7, 6) sind so zu einer einstückigen Baueinheit zusammengefaßt, die von dem Träger (8, 9) gebildet wird. An seiner den Ventilsitzen (20 und 5) abgewandten Seite weist der Träger (8, 9) einen Fortsatz (9) auf, der in eine stirnseitige Öffnung (13) eines Ankers (12) einer Elektromagneteinrichtung (11, 12) eingetaucht ist. Der Träger (8, 9) ist mit seinem Fortsatz (9) in die Öffnung (13) des Ankers (12) eingepreßt, oder mittels anderer geeigneter Verbindungsmittel, vorzugsweise lösbar, mit dem Anker (12) verbunden. Die Elektromagneteinrichtung (11, 12) dient als Betätigungsmittel für die Ventile (20, 18, 17 und 5, 6, 7).

Die Elektromagneteinrichtung (11, 12) besteht aus einer in einem Gehäuse angeordneten Spulenwicklung (11) und dem von der Spulenwicklung (11) umgebenen Anker (12). Der Anker (12) ist stabförmig ausgebildet und in Richtung der Längsachse der Spulenwicklung (11) bewegbar angeordnet. Die Elektromagneteinrichtung (11, 12) ist mittels geeigneter Verbindungsmittel, wie z.B. Schrauben, mit dem Gehäuse (1) der Ventileinrichtung so verbunden, daß ihr Anker (12) sich mit seinem den Träger (8, 9) haltenden Endbereich in die als Druckmittelkammer (19) dienende Ausnehmung des Gehäuses (1) hinein, in Richtung auf die beiden Ventilsitze (20 und 5) zuerstreckt. Zwischen dem Gehäuse (1) der Ventileinrichtung und dem Gehäuse der Elektromagneteinrichtung (11, 12) ist ein ringförmiges Dichtelement (10) angeordnet. Eine als Kegelfeder ausgebildete Feder (14) stützt sich mit ihrem einen Ende am Gehäuse der Elektromagneteinrichtung (11, 12) ab und beaufschlagt mit ihrem anderen Ende einen umlaufenden Vorsprung (15) des Ankers (12) in Richtung auf die beiden Ventilsitze (20 und 5) zu, so daß die bewegbaren Ventilglieder (18, 17 und 6, 7) durch die Kraft der Feder (14) auf den Ventilsitzen (20 und 5) gehalten werden.

Die Funktion der Ventileinrichtung wird nachfolgend näher erläutert.

Es wird angenommen, daß der dritte Druckmittelanschluß (3) mit einer Druckmittelquelle, z.B. einem Druckluft-Vorratsbehälter, verbunden ist und der erste Druckmittelanschluß (2) sowie der zweite Druckmittelanschluß (4) an je einen Verbraucher, z.B. je einen Luftfederbalg eines luftgefederten Fahrzeugs, angeschlossen ist.

In der dargestellten Schaltstellung der Ventileinrichtung ist die Elektromagneteinrichtung (11, 12) stromlos und die beiden Ventile (20, 18, 17 und 5, 6, 7) befinden sich in ihrer Schließstellung. Der erste Druckmittelanschluß (2) und der zweite Druckmittelanschluß (4) sind gegeneinander und gegen den dritten Druckmittelanschluß (3) abgesperrt. In der Druckmittelkammer (19) steht Vorratsdruck an.

Wird die Elektromagneteinrichtung (11, 12) bestromt, bewegt sich der Anker (12) mit dem Träger (8, 9) in Richtung von den Ventilsitzen (20 und 5) weg. Die Ventilglieder (18, 17 und 6, 7) werden gleichzeitig von den ihnen zugeordneten Ventilsitzen (20 und 5) abgehoben, so daß die beiden Ventile (20, 18, 17 und 5, 6, 7) gleichzeitig in ihre Offenstellung gelangen. Der erste Druckmittelanschluß (2) und der zweite Druckmittelanschluß (4) sind dann über die Druckmittelkammer (19) miteinander und mit dem dritten Druckmittelanschluß (3) verbunden. Druckmittel aus der Druckmittelquelle strömt dann durch die Druckmittelkammer (19) und das geöffnete erste Ventil (20, 18, 17) zum ersten Druckmittelanschluß (2) und gleichzeitig durch das geöffnete zweite Ventil (5, 6, 7) zum zweiten Druckmittelanschluß (4). In beide Verbraucher wird so gleichzeitig Druckmittel eingesteuert.

Soll der Druckeinsteuervorgang beendet werden, wird der Strom von der Elektromagneteinrichtung weggenommen. Der Anker (12) und mit diesem der Träger (8, 9) wird dann durch die Kraft der Feder (14) in Richtung auf die Ventilsitze (20 und 5) zu verschoben. Die beiden Ventilglieder (18, 17 und 5, 6) kommen dann gleichzeitig an den ihnen zugeordneten Ventilsitzen (20 und 5) zur Anlage, so daß die beiden Ventile (20, 18, 17 und 5, 6, 7) sich dann wieder in ihrer Schließstellung befinden.

Durch das gleichzeitige Öffnen und das auch gleichzeitige Schließen der beiden Ventile (20, 18, 17 und 5, 6, 7) ist sichergestellt, daß die beiden Verbraucher gleichzeitig und auch mit der gleichen Druckmittelmenge versorgt werden.

Soll der Druck in den Verbrauchern abgesenkt werden, so kann zwischen der Druckmittelquelle und dem dritten Druckmittelanschluß (3) der Ventileinrichtung eine als 3/2-Wegeventil ausgebildete weitere Ventileinrichtung geschaltet werden, über welche der dritte Druckmittelanschluß wahlweise mit der Druckmittelquelle oder mit einer Druckmittelsenke, wie z.B. der Atmosphäre, verbunden werden kann.

Ist, z.B. durch Fertigungstoleranzen bedingt, der Abstand zwischen dem ersten Ventilsitz (20) und dem ersten bewegbaren Ventilglied (18, 17) nicht gleich dem Abstand zwischen dem zweiten Ventilsitz (5) und dem zweiten bewegbaren Ventilglied (6, 7) - wenn z.B. die einander zugewandten Flächen von Ventilgliedern und Ventilsitzen nicht absolut parallel zueinander verlauten- , so setzt beim Schließen der beiden Ventile (20, 18, 17 und 5, 6, 7) das Ventilglied (18, 17 bzw. 6, 7), welches den geringeren Abstand zu dem ihm zugeordneten Ventilsitz (20 bzw. 5) aufweist, zuerst auf seinem Ventilsitz (20 bzw. 5) auf. Bei der weiteren Bewegung des Trägers (8, 9) in Richtung auf die beiden Ventilsitze (20 und 5) zu verformt sich der Träger (8, 9) in seinem elastisch verformbaren Bereich (16) -Biegezone- in der Weise, daß das betroffene Ventilglied (18, 17 bzw. 6, 7) um einen geringen Betrag abgebogen wird. Das jeweils andere Ventilglied (6, 7 bzw. 18, 17) setzt dann auf dem ihm zugeordneten Ventilsitz (5 bzw. 20) auf. Beide Ventile (20, 18, 17 und 5, 6, 7) sind dann absolut dicht geschlossen. Beim Öffnen der beiden Ventile (20, 18, 17 und 5, 6, 7) erlangt der Träger wieder seine ursprüngliche Form.

Die Mittel zum Ausgleichen von Toleranzen zwischen den Ventilsitzen und/oder zwischen wenigstens dem einen Ventilsitz und den Ventilgliedern können durch die erwähnte Biegezone am Träger für die Ventilglieder gebildet werden. Eine andere Möglichkeit, solche Toleranzen auszugleichen, wird in Fig. 2 gezeigt.

Da lediglich der Träger mit den bewegbaren Ventilgliedern anders als bei der Ventileinrichtung gemäß Fig. 1 ausgebildet ist, wird nachfolgend auch nur der Träger mit den Ventilgliedern beschrieben, wobei zum besseren Verständnis auf Bauteile der in Fig. 1 gezeigten Ventileinrichtung Bezug genommen wird.

Der mit dem Anker (12) verbundene Träger (8, 9) besitzt ein plattenartiges Teil (8), in welchem eine erste Durchgangsöffnung (22) und eine zweite Durchgangsöffnung (32) angeordnet sind, die in Richtung der Längsachse der Ventilsitze (20, 5) verlaufen. Ein erstes Ventilglied (24, 25), welches auf seiner einen Seite ein Dichtelement (25) und auf seiner dieser Seite abgewandten anderen Seite einen stößelartigen Fortsatz (23) aufweist, erstreckt sich mit dem Fortsatz (23) durch die erste Durchgangsöffnung (22) hindurch. An dem freien Ende des Fortsatzes (23) ist ein Sicherungselement (21), welches z.B. eine Mutter sein kann, die auf ein Gewinde des Fortsatzes (23) aufgeschraubt ist, angeordnet. Eine Feder (26) stützt sich mit ihrem einen Ende an dem Träger (8, 9) ab und beaufschlagt das Ventilglied (24, 25) vom Träger (8, 9) weg, in Richtung auf den ersten Ventilsitz (20) zu. Ein zweites Ventilglied (27, 28), welches ebenfalls ein Dichtelement (28) und einen stößelartigen Fortsatz (30) aufweist, erstreckt sich mit seinem stößelartigen Fortsatz (30) durch die zweite Durchgangsöffnung (32) hindurch. An dem freien Ende des Fortsatzes (30) ist ebenfalls ein Sicherungselement (31) angeordnet, welches ein unbeabsichtigtes Lösen des zweiten Ventilgliedes vom Träger (8, 9) verhindert. Eine Feder (29) stützt sich mit ihrem einen Ende an dem Träger (8, 9) ab und beaufschlagt mit ihrem anderen Ende das Ventilglied (27, 28) vom Träger (8, 9) weg, in Richtung auf den zweiten Ventilsitz (5) zu.

Da jedes der beiden Ventilglieder (24, 25 und 27, 28) gegen die Kraft der ihm zugeordneten Feder (26 bzw. 29) relativ zum Träger (8, 9) bewegbar am Träger (8, 9) angeordnet ist, werden Toleranzen zwischen den Ventilsitzen (20, 5) und/oder zwischen wenigstens dem einen Ventilsitz (20 bzw. 5) und den Ventilgliedern (24, 25 und 27, 28) dadurch ausgeglichen, daß das eine Ventilglied (24, 25 bzw. 27, 28), welches im geöffneten Zustand der Ventile (20, 24, 25 und 5, 27, 28) den geringeren Abstand zu dem ihm zugeordneten Ventilsitz (20 bzw. 5) hat, beim Schließvorgang der Ventile (20, 24, 25 und 5, 27, 28) so weit gegen die Kraft der ihm zugeordneten Feder (26 bzw. 29) verschoben wird, bis das jeweils andere Ventilglied (27, 28 bzw. 24, 25) an dem ihm zugeordneten Ventilsitz (5 bzw. 20) zur Anlage kommt. Bewegt der Träger (8, 9) sich zum Öffnen der beiden Ventile (20, 24, 25 und 5, 27, 28) in Richtung von den Ventilsitzen (20 und 5) weg, werden die beiden Ventilglieder (24, 25 und 27, 28) durch die Kraft der ihnen zugeordneten Federn (26 und 29) wieder in ihre Ausgangsstellung gebracht.

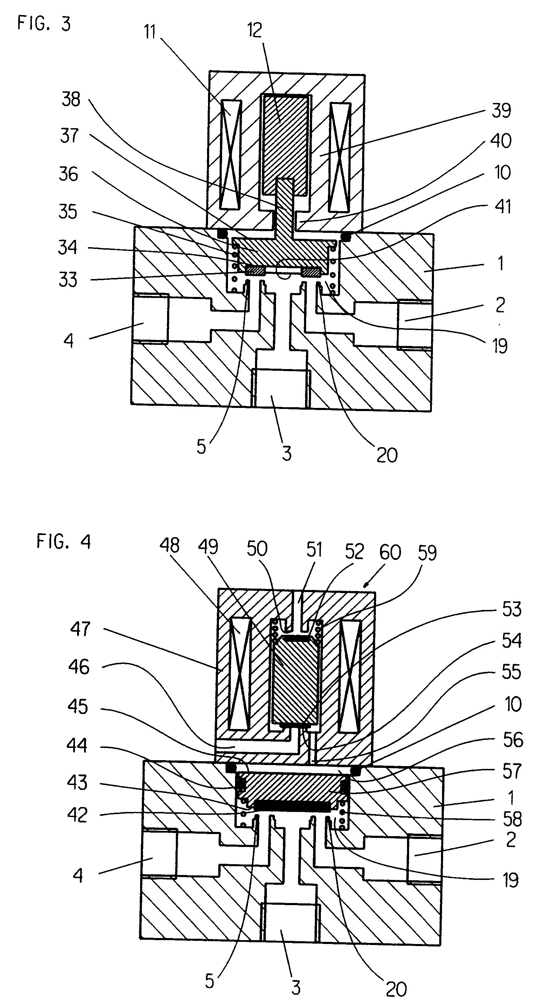

Fig. 3 zeigt eine Ventileinrichtung, die sich von der Ventileinrichtung gemäß Fig. 1 dadurch unterscheidet, daß das für beide Ventilsitze gemeinsame bewegbare Ventilglied so ausgebildet ist, daß es vom Druckmittel umspült wird und daß seine Schließbewegung gegen eine Federkraft erfolgt. Der besseren Übersicht halber sind die den in Fig. 1 gezeigten Bauteilen gleichen Bauteile mit gleichen Bezugsziffern versehen.

Die Ventileinrichtung weist ein Gehäuse (1) mit drei Druckmittelanschlüssen (2, 4 und 3), einen ersten Ventilsitz (20) und einen zweiten Ventilsitz (5) sowie eine Druckmittelkammer (19) auf, in welcher die Ventilsitze (20 und 5) gelegen sind. Die Ventilsitze (20 und 5) sind in einer Ebene nebeneinander angeordnet. Mit dem Gehäuse (1) der Ventileinrichtung ist eine als Betätigungsmittel für die Ventile der Ventileinrichtung dienende Elektromagneteinrichtung (11, 12, 39, 40) verbunden, die eine Spulenwicklung (11), ein U-förmig ausgebildetes Joch (39, 40) und einen Anker (12) aufweist. Das Joch (39, 40) besitzt an seinem der Druckmittelkammer (19) zugewandten Ende einen die eine Stirnseite des Ankers (12) übergreifenden Vorsprung (40). In der Druckmittelkammer (19) ist ein als bewegbares Ventilglied (36, 38) dienender abgestufter rotationssymmetrischer Körper den beiden Ventilsitzen (20 und 5) gegenüber angeordnet. Das Ventilglied (36, 38) besitzt an seiner den Ventilsitzen abgewandten Seite einen zentrisch angeordneten Fortsatz (38), mit welchem es an der ihm zugewandten Seite des Ankers (12) befestigt ist. Auf seiner den Ventilsitzen (20 und 5) zugewandten Seite weist das Ventilglied (36, 38) eine umlaufende Nut (34) auf, in welcher ein als Dichtelement (33) dienender ringförmiger Körper aus einem elastisch verformbaren Material -z.B. ein aus Gummi hergestellter O-Ring- angeordnet ist. Der Durchmesser und der Querschnitt des ringförmigen Dichtelementes (33) sind so gewählt, daß die beiden Ventilsitze (20 und 5) in etwa auf dem mittleren Durchmesser des Dichtelementes (33) gelegen sind und der Querschnitt des Dichtelementes (33) größer ist als der Innendurchmesser jeder der beiden Ventilsitze (20 und 5). Das Ventilglied (36, 38) besitzt auf seiner den Ventilsitzen (20 und 5) zugewandten Seite eine erste Fläche (41) und auf seiner den Ventilsitzen (20 und 5) abgewandten anderen Seite eine zweite Fläche (37), die vom Druckmittel in der Druckmittelkammer (19) einander entgegengerichtet beaufschlagt werden. Eine in der Druckmittelkammer (19) angeordnete Feder (35) stützt sich mit ihrem einen Ende an dem die Druckmittelkammer (19) begrenzenden Boden ab und beaufschlagt mit ihrem anderen Ende das bewegbare Ventilglied (36, 38) in Richtung von den beiden Ventilsitzen (20 und 5) weg. Zwischen dem Gehäuse (1) der Ventileinrichtung und dem Gehäuse der Elektromagneteinrichtung (11, 12, 39, 40) ist ein Dichtring (10) angeordnet, der ein ungewolltes Austreten von Druckmittel aus der Druckmittelkammer (19) verhindert.

Wie auch bei der Ventileinrichtung gemäß Fig. 1 ist der dritte Druckmittelanschluß (3) mit einer Druckmittelquelle oder mit einem Druckmittelanschluß einer der Ventileinrichtung vorgeschalteten weiteren Ventileinrichtung verbunden. Der erste Druckmittelanschluß (2) und der zweite Druckmittelanschluß (4) stehen mit je einem Verbraucher in Verbindung.

In der gezeigten Stellung des für die beiden Ventilsitze (20 und 5) gemeinsamen bewegbaren Ventilgliedes (36, 38) befinden sich das vom ersten Ventilsitz (20) und dem Ventilglied (36, 38) gebildete erste Ventil (20, 36, 38) und das vom zweiten Ventilsitz (5) und dem Ventilglied (36, 38) gebildete zweite Ventil (5, 36, 38) in ihrer Offenstellung. Die Elektromagneteinrichtung (11, 12, 39, 40) ist stromlos. Die vom Druckmittel in der Druckmittelkammer (19) auf die erste Fläche (41) des Ventilgliedes (36, 38) ausgeübte Kraft und die vom Druckmittel der Druckmittelkammer (19) auf die zweite Fläche (37) und auf die dem Ventilglied (36, 38) abgewandte Stirnfläche des Ankers (12) dieser Kraft entgegengerichtet ausgeübte Kraft bewirken, daß bezüglich der Druckkräfte Kräftegleichgewicht am Ventilglied (36, 38) herrscht, so daß das Ventilglied (36, 38) lediglich durch die Kraft der Feder (35) in der Offenstellung der beiden Ventile (20, 36, 38 und 5, 36, 38) gehalten wird.

Wird die Elektromagneteinrichtung (11, 12, 39, 40) bestromt, wird der Anker (12) von der Magnetkraft in Richtung auf den Vorsprung (40) zu angezogen. Der Anker (12) und das mit diesem verbundene Ventilglied (35, 38) bewegen sich gegen die Kraft der Feder (35) in Richtung auf die beiden Ventilsitze (20 und 5) zu, so weit, bis das Ventilglied (36, 38) mit seinem Dichtelement (33) auf die Ventilsitze (20 und 5) aufsetzt. Beide Ventile (20, 36, 38 und 5, 36, 38) sind dann geschlossen. Der erste Druckmittelanschluß (2) und der zweite Druckmittelanschluß (4) sind dann gegeneinander und gegen den dritten Druckmittelanschluß (3) abgesperrt.

Wird der Strom von der Elektromagneteinrichtung weggenommen, wird das Ventilglied (36, 38) durch die Kraft der Feder (35) von den Ventilsitzen (20 und 5) abgehoben. Das Ventilglied (36, 38) und der Anker (12) gelangen wieder in ihre Ausgangsstellung zurück.

Fig. 4 zeigt eine vorgesteuerte Ventileinrichtung, deren bewegbares Ventilglied als Kolben ausgebildet ist. Der besseren Übersicht halber sind die den in Fig. 1 gezeigten Bauteilen gleichen Bauteile mit gleichen Bezugszeichen versehen.

Die Ventileinrichtung weist ein Gehäuse (1) mit einem ersten Druckmittelanschluß (2), einem zweiten Druckmittelanschluß (4) und einem dritten Druckmittelanschluß (3) sowie einer ersten Druckmittelkammer (19) und einer zweiten Druckmittelkammer (56) auf. In der ersten Druckmittelkammer (19) sind ein erster Ventilsitz (20) und ein zweiter Ventilsitz (5) in einer Ebene nebeneinander angeordnet. Die erste Druckmittelkammer (19) wird von einer ersten Fläche (43) eines Kolbens begrenzt, der die Funktion eines für beide Ventilsitze (20 und 5) gemeinsamen bewegbaren Ventilgliedes (57) hat. In einer Umfangsnut des Kolbens ist ein Dichtring (44) angeordnet, der dichtend an der die beiden Druckmittelkammern (19 und 56) seitlich begrenzenden Wand anliegt. Die als Steuerkammer dienende zweite Druckmittelkammer (56) wird von einer zweiten Fläche (45) des Kolbens begrenzt, welche von der der ersten Druckmittelkammer (19) abgewandten anderen Seite des Kolbens gebildet wird. Auf der den Ventilsitzen (20 und 5) zugewandten Seite besitzt das Ventilglied (57) ein plattenartiges Dichtelement (42), dessen Durchmesser so bemessen ist, daß es beide Ventilsitze (20 und 5) überdeckt. Der erste Ventilsitz (20) bildet mit dem Ventilglied (57) ein erstes Ventil (20, 57) und der zweite Ventilsitz (5) bildet mit dem Ventilglied (57) ein zweites Ventil (5, 57). Eine in der ersten Druckmittelkammer (19) angeordnete Feder (58) stützt sich mit ihrem einen Ende an dem die erste Druckmittelkammer (19) begrenzenden Boden ab und beaufschlagt mit ihrem anderen Ende den als bewegbares Ventilglied (57) dienenden Kolben in Öffnungsrichtung der beiden Ventile (20, 57 und 5, 57). Der Kolben hat eine Doppelfunktion. Er dient sowohl als bewegbares Ventilglied (57) als auch als Betätigungsmittel für die beiden Ventile (20, 57 und 5, 57).

Am Gehäuses (1) der Ventileinrichtung ist ein als 3/2-Wegeventil ausgebildetes Elektromagnetventil (60) so angeordnet, daß es die zweite Druckmittelkammer (56) begrenzt. Zwischen dem Gehäuse (1) der Ventileinrichtung und dem Gehäuse (47) des Elektromagnetventils (60) ist ein Dichtring (10) angeordnet. Das Elektromagnetventil (60) weist einen Anker (49) und eine koaxial zum Anker (49) angeordnete Spulenwicklung (48) auf. An den beiden einander abgewandten Stirnseiten des Ankers (49) sind Dichtelemente (52 und 53) angeordnet. Der Anker (49) bildet mit einem ersten Ventilsitz (54) ein Einlaßventil (54, 53, 49) und mit einem zweiten Ventilsitz (50) ein Auslaßventil (50, 52, 49). Eine Feder (59), die sich mit ihrem einen Ende am Gehäuse des Elektromagnetventils (60) abstützt, beaufschlagt den Anker (49) in Schließrichtung des Einlaßventils (54, 53, 49). Das Elektromagnetventil (60) besitzt einen mit einer Druckmittelquelle verbundenen Druckmitteleingang (46), einen mit der zweiten Druckmittelkammer (56) der Ventileinrichtung verbundenen Druckmittelausgang (55) und einen zu einer Druckmittelsenke (z.B. Atmosphäre) hinführenden Druckmittelauslaß (51). Die zweite Druckmittelkammer (56) der Ventileinrichtung ist über daß Einlaßventil (54, 53, 49) mit der Druckmittelquelle und über das Auslaßventil (50, 52, 49) mit der Druckmittelsenke verbindbar.

Bei stromloser Spulenwicklung (48) befindet das Einlaßventil (54, 53, 49) des Elektromagnetventils (60) sich in seiner Schließstellung und das Auslaßventil (50, 52, 49) ist geöffnet. Die als Steuerkammer dienende zweite Druckmittelkammer (56) der Ventileinrichtung ist über das Auslaßventil (50, 52, 49) des Elektromagnetventils (60) mit der Druckmittelsenke verbunden. Durch die Kraft der Feder (58) wird das Ventilglied (57) der Ventileinrichtung in einer Position gehalten, in welcher die beiden Ventile (20, 57 und 5, 57) der Ventileinrichtung sich in ihrer Offenstellung befinden. Die mit dem ersten Druckmittelanschluß (2) und dem zweiten Druckmittelanschluß (4) der Ventileinrichtung verbundenen Verbraucher sind über die erste Druckmittelkammer (19) miteinander und über die erste Druckmittelkammer (19) und den dritten Druckmittelanschluß (3) mit einer Druckmittelquelle verbunden.

Wird die Spulenwicklung (48) bestromt, gelangt das Auslaßventil (50, 52, 49) des Elektromagnetventils (60) in seine Schließstellung und das Einlaßventil (54, 53, 49) gelangt in seine Offenstellung. Steuerdruckmittel strömt durch das geöffnete Einlaßventil (54, 53, 49) in die zweite Druckmittelkammer (56) der Ventileinrichtung. Durch die Kraft des sich in der zweiten Druckmittelkammer (56) aufbauenden und auf das bewegbare Ventilglied (57) einwirkenden Druckes bewegt das Ventilglied (57) sich in Richtung auf die beiden Ventilsitze (20 und 5) zu, so weit, bis das Ventilglied (57) mit seinem Dichtelement (42) an den beiden Ventilsitzen (20 und 5) zur Anlage kommt. Beide Ventile (20, 57 und 5, 57) der Ventileinrichtung werden so gleichzeitig geschlossen.

Sollen die beiden Ventile (20, 57 und 5, 57) wieder geöffnet werden, wird der Strom von der Spulenwicklung (48) weggenommen. Das Einlaßventil (54, 53, 49) des Elektromagnetventils (60) gelangt dann in seine Schließstellung und das Auslaßventil (50, 52, 49) des Elektromagnetventils (60) gelangt in seine Offenstellung. Der Druck in der zweiten Druckmittelkammer (56) der Ventileinrichtung wird über das Auslaßventil (50, 52, 49) des Elektromagnetventils (60) zur Druckmittelsenke hin abgebaut. Durch die Kraft der Feder (58) angetrieben bewegt das Ventilglied (57) der beiden Ventile (20, 57 und 5, 57) der Ventileinrichtung sich in Richtung von den Ventilsitzen (20 und 5) weg. Die beiden Ventile (20, 57 und 5, 57) gelangen dann gleichzeitig in ihre Offenstellung.

Gemäß der Erfindung kann der in Fig. 4 gezeigte Kolben auch als Träger für ein für beide Ventilsitze gemeinsames bewegbares Ventilglied oder als Träger für wenigstens zwei bewegbare Ventilglieder ausgebildet sein.

Ebenso kann der in den Figuren 1 und 3 gezeigte Anker der Elektromagneteinrichtung als Träger für wenigstens zwei bewegbare Ventilglieder oder als ein für beide Ventilsitze gemeinsames bewegbares Ventilglied ausgebildet sein.

Selbstverständlich können gemäß der Erfindung in der Ventileinrichtung auch mehr als zwei Ventile angeordnet werden, deren bewegbare Ventilglieder an einem gemeinsamen Träger angeordnet sind oder die ein einziges für alle Ventilsitze gemeinsames bewegbares Ventilglied besitzen.

Gemäß den Ausführungsbeispielen sind die beiden Ventilsitze nebeneinander in einer Ebene angeordnet. Es ist gemäß der Erfindung auch möglich, die beiden Ventilsitze zwar nebeneinander, jedoch in unterschiedlichen Ebenen anzuordnen, so daß der jeweils eine Ventilsitz gegenüber dem jeweils anderen Ventilsitz tiefer bzw. höher gelegen ist.

## Patentansprüche

1. Ventileinrichtung mit folgenden Merkmalen:
a) es ist ein erstes Ventil (20, 17, 24) mit einen ersten Ventilsitz (20) und einem relativ zu diesem bewegbaren ersten Ventilglied (17, 24) und ein zweites Ventil (5, 7, 27) mit einem zweiten Ventilsitz (5) und einem relativ zu diesem bewegbaren zweiten Ventilglied (7, 27) vorgesehen;
b) die beiden Ventilsitze (20 und 5) sind nebeneinander angeordnet;
c) es ist ein erster Druckmittelanschluß (2) und ein zweiter Druckmittelanschluß (4) vorgesehen;
d) es ist ein für beide Ventilglieder (17, 24 und 7, 27) gemeinsames Betätigungsmittel (11, 12, 57) zum gleichzeitigen Betätigen der beiden Ventile (20, 17, 24 und 5, 7, 27) vorgesehen;
gekennzeichnet durch die folgenden Merkmale:
e) es ist ein dritter Druckmittelanschluß (3) vorgesehen;
f) die beiden Ventile (20, 17, 24 und 5, 7, 27) sind so ausgebildet und so mit den Druckmittelanschlüssen (3, 2, 4) verbunden, daß wenigstens zwei Druckmittelanschlüsse (2 und 4) gleichzeitig wahlweise miteinander und mit dem dritten Druckmittelanschluß (3) verbindbar oder gegeneinander und gegen den dritten Druckmittelanschluß (3) absperrbar sind;
g) das erste Ventilglied (17, 24) und das zweite Ventilglied (7, 27) sind an einem für die beiden Ventilgileder (17, 24 und 7, 27) gemeinsamen Träger (8, 9) angeordnet.

2. Ventileinrichtung mit folgenden Merkmalen:
a) es ist ein erstes Ventil (20, 17, 36, 57) mit einem ersten Ventilsitz (20) und einem relativ zu diesem bewegbaren ersten Ventilglied (17, 36, 57) und ein zweites Ventil (5, 7, 36, 57) mit einem zweiten Ventilsitz (5) und einem relativ zu diesem bewegbaren zweiten Ventilglied (7, 36, 57) vorgesehen;
b) die beiden Ventilsitze (20 und 5) sind nebeneinander angeordnet;
c) es ist ein erster Druckmittelanschluß (2) und ein zweiter Druckmittelanschluß (4) vorgesehen;
d) es ist ein für beide Ventilglieder (17, 7, 36, 57) gemeinsames Betätigungsmittel (11, 12, 57) zum gleichzeitigen Betätigen der beiden Ventile (20, 17, 36, 57 und 5, 7, 36, 57) vorgesehen;
gekennzeichnet durch die folgenden Merkmale:
e) es ist ein dritter Druckmittelanschluß (3) vorgesehen;
f) die beiden Ventile (20, 17, 36, 57 und 5, 7, 36, 57) sind so ausgebildet und so mit den Druckmittelanschlüssen (2, 3, 4) verbunden, daß wenigstens zwei Druckmittelanschlüsse (2 und 4) gleichzeitig wahlweise miteinander und mit dem dritten Druckmittelanschluß (3) verbindbar oder gegeneinander und gegen den dritten Druckmittelanschluß (3) absperrbar sind;
g) die Ventilglieder (17, 7 und 36, 57) sind zu einer einstückigen Baueinheit zusammengefaßt, die ein für beide Ventile (20, 17, 36, 57 und 5, 7, 36, 57) gemeinsames bewegbares Ventilglied (17, 7, 36, 57) bildet.

3. Ventileinrichtung nach Anspruch 1, dadurch gekennzeichnet, daß das Betätigungsmittel (11, 12, 57) als Träger für die bewegbaren Ventilglieder der beiden Ventile ausgebildet ist.

4. Ventileinrichtung nach Anspruch 2, dadurch gekennzeichnet, daß das Betätigungsmittel (57) als ein für die beiden Ventile (20, 57 und 5, 57) gemeinsames bewegbares Ventilglied ausgebildet ist.

5. Ventileinrichtung nach wenigstens einem der vorhergehenden Ansprüche 1 oder 3, gekennzeichnet durch die folgenden Merkmale:
a) die Ventilglieder (24 und 27) sind relativ zum Träger (8, 9) bewegbar am Träger (8, 9) angeordnet;
b) zwischen jedem Ventilglied (24 bzw. 27) und dem Träger (8, 9) ist je eine Feder (26 bzw. 29) so angeordnet, daß sie das Ventilglied (24 bzw. 27) vom Träger (8, 9) weg, in Richtung auf den dem Ventilglied (24 bzw. 27) zugeordneten Ventilsitz (20 bzw. 5) zu beaufschlagt.

6. Ventileinrichtung nach wenigstens einem der vorhergehenden Ansprüche , dadurch gekennzeichnet, daß Mittel vorgesehen sind, welche zum Ausgleichen von Toleranzen zwischen den Ventilsitzen (20 und 5) und/ oder zwischen wenigstens dem einen Ventilsitz (20, 5) und einem bewegbaren Ventilglied (17, 7, 24, 27, 36, 57) dienen.

7. Ventileinrichtung nach wenigstens einem der vorhergehenden Ansprüche, dadurch gekennzeichnet, daß auf der den Ventilsitzen (20 und 5) zugewandten Seite des bewegbaren Ventilgliedes (36) ein Dichtelement (33) angeordnet ist, welches als ein ringförmiger Körper ausgebildet ist, dessen Durchmesser und dessen Querschnitt so bemessen sind, daß die Ventilsitze (20 und 5) im wesentlichen auf dem mittleren Durchmesser des ringförmigen Körpers liegen, wobei der Querschnitt des ringförmigen Körpers größer ist als der Innendurchmesser jedes der beiden Ventilsitze (20 bzw. 5).

8. Ventileinrichtung nach wenigstens einem der vorhergehenden Ansprüche , dadurch gekennzeichnet, daß die Mittel zum Ausgleichen von Toleranzen von einem elastisch verformbaren Bereich (16) des Trägers (8, 9) für die beiden Ventilglieder (17 und 7) gebildet werden.

9. Ventileinrichtung nach wenigstens einem der vorhergehenden Ansprüche, dadurch gekennzeichnet, daß das Betätigungsmittel für die beiden Ventile (20, 17, 24, 36 und 5, 7, 27, 36) von einer Elektromagneteinrichtung (11, 12) gebildet wird, welche eine Spule (11) und einen Anker (12) aufweist.

10. Ventileinrichtung nach wenigstens einem der vorhergehenden Ansprüche, gekennzeichnet durch die folgenden Merkmale:
a) das Betätigungsmittel für die beiden Ventile (20, 57 und 5, 57) wird von einem Kolben gebildet, der mit einem Steuerdruckmittel beaufschlagbar ist;
b) der Kolben begrenzt mit seiner den beiden Ventilen (20, 57 und 5, 57) abgewandten Seite eine Steuerkammer (56), die über ein Ventil (60) wahlweise mit einer Druckmittelquelle oder mit einer Druckmittelsenke verbindbar ist.

11. Ventileinrichtung nach wenigstens einem der vorhergehenden Ansprüche, gekennzeichnet durch die folgenden Merkmale:
a) das bewegbare Ventilglied (36, 17, 7) oder/und der Träger (8, 9) weist auf seiner den Ventilsitzen (20 und 5) zugewandten Seite eine mit einem Druck beaufschlagbare erste Fläche (41) und auf seiner dieser Seite abgewandten anderen Seite eine mit dem gleichen Druck beaufschlagbare zweite Fläche (37) auf;
b) es ist eine Feder (35, 14) vorgesehen, die so angeordnet ist, daß sie das bewegbare Ventilglied (36, 17, 7) oder das Betätigungsmittel (12) oder den Träger (8, 9) in Richtung auf die eine Endlage des Ventilgliedes (36, 17, 7) zu beaufschlagt.
